# EUROPÄISCHE PATENTSCHRIFT

(11) **EP 1 811 434 B1**
(45) Veröffentlichungstag und Bekanntmachung des Hinweises auf die Patenterteilung: **16.07.2008**
(21) Anmeldenummer: 07000475.9
(22) Anmeldetag: 11.01.2007
(51) Int. Cl.: G06K 19/073, G06K 7/00, G07F 7/10

(54) **Verfahren zur Zugriffssteuerung auf den Speicher eines Transponders**
Method for access control for a transponder memory
Procédé destiné à la commande d'accès au memoire d'un transpondeur

(30) Priorität: 16.01.2006 DE 102006002516
(43) Veröffentlichungstag der Anmeldung: 25.07.2007
(73) Patentinhaber: ATMEL Germany GmbH, 74072 Heilbronn (DE)
(72) Erfinder: Friedrich, Ulrich, 74248 Ellhofen (DE)

(56) Entgegenhaltungen:
- EP-A- 1 742 166
- US-A1- 2004 134 984
- EPC GLOBAL: "Specification for RFID Air Interface. EPC (tm) Radio-Frequency Indentity Protocols Class-1 Generation-2 UHF RFID Protocol for Communications at 860 MHz - 960 MHz (Version 1.0.9)" INTERNET CITATION, [Online] 31. Januar 2005 (2005-01-31), XP007902164 Gefunden im Internet: URL:http://www.nepc.gs1.org.sg/epcglobal/s tdsdocs/EPC_class1_gen2_UHFRFID _protocol_1-0-9.pdf> [gefunden am 2007-04-25]
- FINKENZELLER K: "RFID-Handbuch: Kapitel 8 (Datensicherheit), 10.1 (Transponder mit Speicherfunktion)" RFID HANDBUCH, HANSER VERLAG, MUENCHEN, DE, 31. Dezember 1998 (1998-12-31), Seiten 133-140,155, XP002394433

## Beschreibung

Die Erfindung betrifft ein Verfahren zur Zugriffssteuerung auf mindestens einen Speicherbereich eines, insbesondere passiven und/oder rückstreubasierten, Transponders.

Derartige Zugriffssteuerungsverfahren finden beispielsweise bei kontaktlosen Identifikationssystemen oder so genannten Radio-Frequency-Identification(RFID)-Systemen Verwendung. Ein derartiges System besteht üblicherweise aus einer Basisstation bzw. einem Lesegerät oder einer Leseeinheit und einer Vielzahl von Transpondern oder Remote-Sensoren, die sich gleichzeitig im Ansprechbereich der Basisstation befinden. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die so genannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage des Unterträgers geändert wird.

In dem Normungsvorschlag ISO/IEC_CD 18000-6C vom 07.01.2005 ist ein Zugriffssteuerungsverfahren für Transponder beschrieben. Der Transponder wird hierbei zunächst in einem Auswahl- bzw. Arbitrierungsverfahren aus einer Menge von Transpondern ausgewählt. Bei dem beschriebenen Auswahlverfahren handelt es sich um ein stochastisches Verfahren in Form eines slotbasierten ALOHA-Verfahrens. Derartige Auswahlverfahren sind ausführlich beispielsweise in dem Lehrbuch Klaus Finkenzeller, RFID-Handbuch, 3. Aufl., HANSER, 2002, beschrieben.

Wenn der Transponder ausgewählt bzw. selektiert oder vereinzelt ist, sendet die Leseeinheit eine Anfrage an den Transponder in Form einer Rückübermittlung einer zuvor im Rahmen des Arbitrierungsverfahrens durch den Transponder übertragenen Zufallszahl, worauf der Transponder Protokollsteuerbits (PC) und eine Kennung in Form eines so genannten elektronischen Produktcodes (EPC) an die Leseeinheit überträgt. Die Protokollsteuerbits beinhalten Informationen bezüglich einer physikalischen Schicht der Übertragungsstrecke. Die Kennung bzw. der elektronische Produktcode EPC bildet unter anderem eine durch den Transponder gekennzeichnete Ware ab. Die Zuordnung vom EPC zu der gekennzeichneten Ware ist standardisiert, so dass aus der Kenntnis der EPC auf die Ware geschlossen werden kann. Weiterhin kann der EPC durch die Leseeinheit als Zeiger auf weitere Information, beispielsweise auf ein dem EPC zugeordnetes Passwort, verwendet werden. Das Passwort kann zur Verriegelung von Speicherbereichen des Transponders für Schreibzugriffe dienen.

Die Übertragung des EPC auf Anfrage an die Leseeinheit birgt jedoch gewisse Risiken. So können Unbefugte beim Transport der Waren gezielt nach Waren bestimmten Typs, beispielsweise nach hochwertigen Uhren oder Waffen, suchen, da der warenkennzeichnende EPC ungeschützt übertragen wird. Hierzu ist lediglich ein geeignetes Lesegerät in die Reichweite der Transponder zu bringen, beispielsweise auf einem Autobahnparkplatz oder in Bahnhöfen.

Nach der Übertragung der PC und des EPC durch den Transponder ist ein Lese- und/oder ein Schreibzugriff auf Speicherbereiche des Transponders durch die Leseeinheit möglich, es sei denn, dass bestimmte Bereiche für einen Schreibzugriff verriegelt bzw. gelockt sind. Weiterhin kann ein Lesezugriff auf Passwörter ebenfalls gesperrt sein. Trotz einer möglichen Leseverriegelung der Passwörter besteht ein gewisses Sicherheitsrisiko, dass unbefugte Personen auf möglicherweise private Speicherinhalte Zugriff haben.

Bei der Verwendung des Transponders in so genannten Chipkarten können personenbezogene Daten als Speicherinhalt abgelegt sein. Auch hier ist es wünschenswert, den Zugriff auf diese Daten zu reglementieren, um beispielsweise beim Betreten eines Kaufhauses nicht durch Auslesen des Speicherinhaltes automatisch feststellen zu können, ob der betreffende Kunde noch Geld auf der Chipkarte hat oder nicht.

In der nicht vorveröffentlichten deutschen Patentanmeldung DE 10 2005 032 473.8 der Anmelderin ist ein Verfahren zur Zugriffssteuerung auf einen Transponder der eingangs genannten Art beschrieben, das einen unbefugten Zugriff auf Speicherbereiche des Transponders, insbesondere auf den EPC, zuverlässig verhindert und gleichzeitig kompatibel zu dem genannten ISO-Normungsvorschlag ist.

Bei dem Verfahren wird im Transponder mindestens eine zweite Kennung und ein Kennungsauswahlkriterium gespeichert, bei der Anfrage durch die Leseeinheit in Abhängigkeit von dem Kennungsauswahlkriterium entweder die erste Kennung oder die mindestens zweite Kennung übertragen und, wenn die zweite Kennung übertragen wird, ein Lese- und/oder Schreibzugriff auf den Transponder, insbesondere auf die erste Kennung, nur dann durch den Transponder freigegeben, wenn von der Leseeinheit ein der zweiten Kennung zugeordnetes Passwort an den Transponder übertragen wird.

In der Spezifikation EPC Global: "Specification for RFID Air Interface. EPC (tm) Radio-Frequency Identity Protocols Class-1 Generation-2 UHF RFID Protocol for Communications at 860 MHz - 960 MHz (Version 1.0.9)" ist eine Speicherstruktur und ein Passwortschutz spezifikationskonformer Transponder beschrieben.

In der US 2004/134984 A1 ist die Verwendung unterschiedlicher Schlüssel in einem Transponder beschrieben.

In dem Lehrbuch Finkenzeller K: "RFID-Handbuch: Kapitel 8 (Datensicherheit), 10.1 (Transponder mit Speicherfunktion)" RFID Handbuch, Hanser Verlag, München, DE, 31. Dezember 1998, Seiten 133-140 und 155 bis 169 ist ein Schreibschutz für Speichersegmente durch Schreibschutzbits in einem OTP-Speicher beschrieben.

Der Erfindung liegt die Aufgabe zugrunde, ein Verfahren zur Zugriffssteuerung der eingangs genannten Art zur Verfügung zu stellen, das eine leistungsfähige und flexible Zugriffsteuerung auf Speicherbereiche des Transponders und eine effiziente Speicherausnutzung ermöglicht.

Die Erfindung löst diese Aufgabe durch ein Verfahren zur Zugriffssteuerung nach Anspruch 1.

Bei dem erfindungsgemäßen Verfahren zur Zugriffssteuerung auf mindestens einen Speicherbereich eines, insbesondere passiven und/oder rückstreubasierten, Transponders, wird in Abhängigkeit von einem Kennungsauswahlkriterium eine erste oder mindestens eine zweite Kennung innerhalb des Transponders aktiviert, wobei die aktivierte Kennung bei einer zugehörigen Anfrage durch eine Leseeinheit an diese übertragen wird. Der mindestens eine Speicherbereich des Transponders wird in Speicherblöcke mit einer einstellbaren, insbesondere identischen, Größe aufgeteilt, wobei einem jeweiligen Speicherblock eine Zugriffssteuerungsinformation zugeordnet wird. Ein schreibender und/oder lesender Zugriff auf einen jeweiligen Speicherblock wird in Abhängigkeit von der zugehörigen Zugriffssteuerungsinformation und dem Kennungsauswahlkriterium freigegeben oder gesperrt. Dies ermöglicht eine kennungsspezifische Zugriffssteuerung auf die jeweiligen Speicherblöcke, wobei aufgrund der Unterteilung des Speicherbereichs in einzelne Speicherblöcke eine fein aufgelöste Zugriffssteuerung möglich ist, wodurch sich eine effiziente Ausnutzung des zur Verfügung stehenden Speichers erzielen lässt. Wenn beispielsweise der Transponder zur Überwachung einer Kühlkette an einer zu überwachenden Ware angebracht ist, schreibt dieser beispielsweise in einen vorbestimmten Speicherblock des Speicherbereichs einen von ihm gemessenen Temperaturmaximalwert. Um zu verhindern, dass ein gespeicherter, zu hoher Temperaturwert durch einen unbefugten Benutzer wieder auf einen zulässigen Temperaturwert geändert wird, kann durch ein entsprechendes Setzen der Zugriffssteuerungsinformation kennungs- bzw. anwenderspezifisch verhindert werden, dass ein nicht authorisierter, schreibender Zugriff auf diesen Speicherblock ausgeführt wird. Gleichzeitig kann jedoch ein schreibender Zugriff auf andere Speicherblöcke des selben Speicherbereichs zugelassen werden, in den beispielsweise der Spediteur eingetragen wird.

In einer Weiterbildung des Verfahrens wird die Zugriffssteuerungsinformation in einem nur einmalig programmierbaren Speicher (OTP) des Transponders abgespeichert. Die Zugriffssteuerungsinformation kann in diesem Fall nur einmalig gesetzt und anschließend nicht mehr zurückgesetzt werden. Das einmalige Setzen der Zugriffssteuerungsinformation kann beispielsweise bei der Herstellung des Transponders oder bei einer erstmaligen Inbetriebnahme durchgeführt werden. Auf diese Weise wird verhindert, dass eine nicht authorisierte Freigabe von Speicherblöcken durch Manipulation der Zugriffssteuerungsinformation erfolgen kann.

In einer Weiterbildung des Verfahrens umfasst die Zugriffssteuerungsinformation zwei Bits, wobei ein erstes aus den zwei Bits gebildetes Bitmuster einen schreibenden und lesenden Zugriff auf den jeweiligen Speicherblock unabhängig davon freigibt, ob die erste Kennung oder die zweite Kennung aktiviert ist. Das erste Bitmuster ermöglicht einen abwärtskompatiblen Betrieb des Transponders, da weiterhin ein uneingeschränkter Zugriff auf den Speicherblock möglich ist. Ein zweites aus den zwei Bits gebildetes Bitmuster ermöglicht einen schreibenden und lesenden Zugriff auf den jeweiligen Speicherblock nur bei aktivierter erster Kennung und verhindert den Zugriff, schreibend und lesend, wenn die erste Kennung deaktiviert ist, d.h. wenn die zweite Kennung aktiviert ist. Entsprechend ermöglicht ein drittes aus den zwei Bits gebildetes Bitmuster einen schreibenden und lesenden Zugriff auf den jeweiligen Speicherblock nur bei aktivierter zweiter Kennung und sperrt den Zugriff bei deaktivierter zweiter Kennung, d.h. aktivierter ersten Kennung. Auf diese Weise können Speicherblöcke kennungs- bzw. benutzerabhängig freigegeben oder gesperrt werden. Ein viertes aus den zwei Bits gebildetes Bitmuster gibt einen lesenden Zugriff auf den jeweiligen Speicherblock kennungsunabhängig frei. Ein schreibender Zugriff wird unabhängig davon, ob die erste Kennung oder die zweite Kennung aktiviert ist, gesperrt. Bevorzugt beträgt das erste Bitmuster "00", das zweite Bitmuster "01", das dritte Bitmuster "10" und das vierte Bitmuster "11", jeweils in einer binären Darstellung.

In einer Weiterbildung des Verfahrens wird ein Zugriff auf den Transponder nur dann durch den Transponder freigegeben, wenn von der Leseeinheit ein der aktivierten Kennung zugeordnetes Passwort an den Transponder übertragen wird. Ohne die Zugriffsfreigabe kann beispielsweise keinerlei lesender oder schreibender Zugriff möglich sein.

In einer Weiterbildung des Verfahrens weist der Speicherblock eine Größe einer ganzzahligen Vielfachen von 8 Bits auf. Auf diese weise ist eine feine Aufteilung und somit Ausnutzung des Transponderspeichers möglich.

In einer Weiterbildung des Verfahrens wird ein Zugriff auf den gesamten Speicherbereich in einer vorgeschalteten Zugriffsebene durch eine 2 Bits umfassende Speicherbereichszugriffssteuerungsinformation gesteuert, wobei für einen ersten Wert der Speicherbereichszugriffssteuerungsinformation ein schreibender Zugriff auf den Speicherbereich unabhängig von einer Zustandsinformation des Transponder freigegeben wird, für einen zweiten Wert der Speicherbereichszugriffssteuerungsinformation ein schreibender Zugriff auf den Speicherbereich abhängig von der Zustandsinformation des Transponders freigegeben wird und für einen dritten Wert der Speicherbereichszugriffssteuerungsinformation ein schreibender Zugriff auf den Speicherbereich dauerhaft gesperrt wird. Dies entspricht im wesentlichen der in dem Normungsvorschlag ISO/IEC_CD 18000-6C vom 07.01.2005 unter 6.3.2.10.3.5 beschriebenen Zugriffssteuerung, wobei ein Speicherbereich einer Speicherbank des Normungsvorschlags entspricht. Eine Zustandsinformation bzw. ein Zustand des Transponders, in dem für den zweiten Wert der der Speicherbereichszugriffssteuerungsinformation ein schreibender Zugriff möglich ist, wird in dem Normungsvorschlag als "secured" bezeichnet. Die Kombination aus der Zugriffssteuerungsinformation auf Speicherblockebene und der Speicherbereichszugriffssteuerungsinformation auf Speicherbereichsebene ermöglicht einen normkonformen Betrieb, wobei bei Bedarf eine stärke Zugriffsrechteunterteilung des Speicherbereichs bzw. der Speicherbank möglich ist.

Vorteilhafte Ausführungsformen der Erfindung sind in den Zeichnungen dargestellt und werden nachfolgend beschrieben. Hierbei zeigen schematisch:
- Fig. 1: ein Blockschaltbild eines RFID-Systems mit einer Leseeinheit und einem Transponder und
- Fig. 2: ein Speicherabbild des in Fig. 1 gezeigten Transponders.

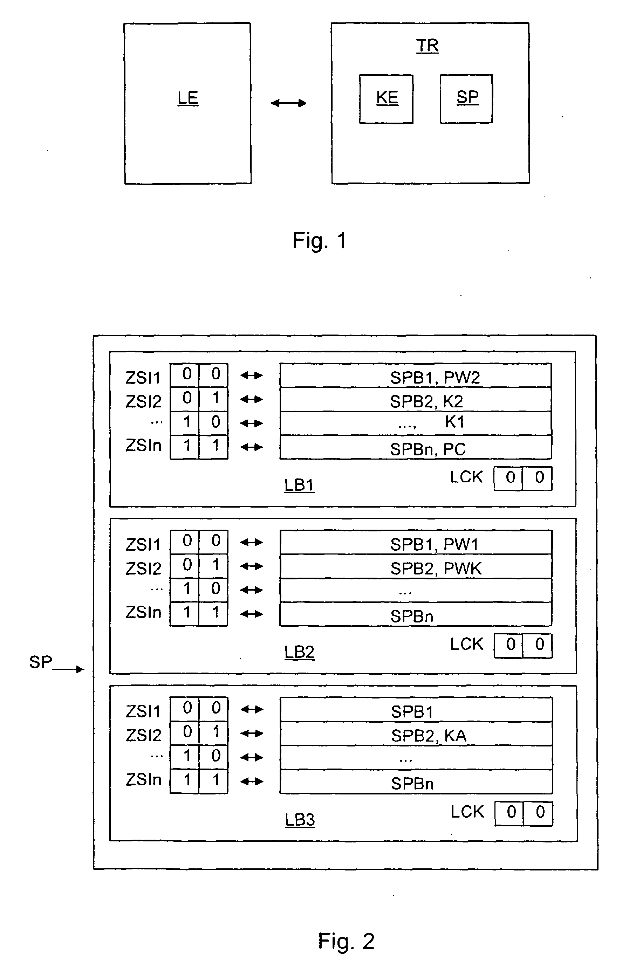

Fig. 1 zeigt schematisch ein Blockschaltbild eines RFID-Systems mit einer Basisstation bzw. Leseeinheit LE und einem passiven rückstreubasierten Transponder TR, die jeweils derart konfiguriert sind, dass sie in ihren Grundfunktionen in Übereinstimmung mit der ISO/IEC_CD 18000-6C vom 07.01.2005 arbeiten. Der Transponder TR umfasst neben weiteren, nicht gezeigten herkömmlichen Funktionseinheiten einen nichtflüchtigen Speicher SP und eine Kryptografieeinheit KE.

Fig. 2 zeigt ein Speicherabbild des in Fig. 1 gezeigten Speichers SP des Transponders TR. Der physikalische Speicher SP ist in logische Speicherbereiche bzw. Speicherbänke LB1 bis LB3 aufgeteilt, die als Adressangabe bzw. Index bei einem Speicherzugriff der Leseeinheit LE auf den Transponder TR verwendet werden. Neben den gezeigten Speicherbereichen können noch weitere, nicht gezeigte Speicherbereiche vorgesehen sein.

Der logische Bereich LB1 dient zur Speicherung einer ersten Kennung K1 in Form eines elektronischen Produktcodes EPC, einer zweiten Kennung K2 und von Protokollsteuerbits PC. Der logische Bereich LB2 dient zur Speicherung eines der ersten Kennung K1 zugeordneten öffentlichen Passworts PW1 und eines so genannten Kill-Passworts PWK. Das Kill-Passwort PWK wird dazu verwendet, den Transponder TR aus Datenschutzgründen, beispielsweise bei einer Verschrottung einer durch den Transponder TR gekennzeichneten Ware, dauerhaft zu deaktivieren, d.h. Schreib- und Lesezugriffe permanent zu sperren.

Der Bereich LB3, der einen Nutzerspeicher zur Speicherung nutzerspezifischer Daten bildet, beinhaltet ein Kennungsauswahlkriterium KA in Form eines einstellbaren Bitwertes. Wenn der Bitwert "1" beträgt ist, die erste Kennung ausgewählt, und wenn der Bitwert "0" beträgt, ist die zweite Kennung ausgewählt. Die jeweils aktivierte Kennung wird bei einer zugehörigen Anfrage durch die Leseeinheit LE an diese übertragen.

Ein der zweiten Kennung K2 zugeordnetes öffentliches Passwort PW2 kann im SpeicherbereichLB2 und/oder im SpeicherbereichLB1 gespeichert werden. In der gezeigten Ausführungsform ist das Passwort PW2 im SpeicherbereichLB1 gespeichert, da das Kill-Passwort PWK sowie eine zugehörige Kill-Funktionalität aktiviert sind. Wenn die Kill-Funktionalität jedoch deaktiviert ist, d.h. kein Kill-Passwort PWK benötigt wird, kann das Passwort PW2 auch im Speicherbereich LB2 des Kill-Passworts PWK gespeichert werden.

Die Speicherbereiche bzw. Speicherbänke LB1 bis LB3 sind jeweils in Speicherblöcke SPB1 bis SPBn aufgeteilt, die jeweils eine Größe von 32 Bits aufweisen. Den Speicherblöcken SPB1 bis SPBn ist jeweils eine zugehörige Zugriffssteuerungsinformation ZSI1 bis ZSIn zugeordnet, die zwei Bits umfasst. Die Zugriffssteuerungsinformationen ZSI1 bis ZSIn sind in nur einmalig programmierbaren Speicherzellen des Transponders TR abgespeichert. Sie werden beispielsweise bei einer erstmaligen Inbetriebnahme des Transponders TR auf den gewünschten Wert gesetzt.

Ein schreibender und/oder lesender Zugriff auf einen jeweiligen Speicherblock SPB1 bis SPBn wird in Abhängigkeit von der zugehörigen Zugriffssteuerungsinformation ZSI1 bis ZSIn und dem Kennungsauswahlkriterium KA freigegeben oder gesperrt.

Wenn die Zugriffssteuerungsinformation ZSI1 bis ZSIn einen binären Wert von "00" aufweist, ist ein schreibender und lesender Zugriff auf den zugehörigen Speicherblock SPB1 bis SPBn freigegeben, unabhängig davon, ob die erste Kennung oder die zweite Kennung aktiviert ist, d.h. welchen Wert das Kennungsauswahlkriterium KA aufweist.

Wenn die Zugriffssteuerungsinformation ZSI1 bis ZSI_{N} einen binären Wert von "01" aufweist, ist ein schreibender und lesender Zugriff auf den zugehörigen Speicherblock SPB1 bis SPBn nur dann freigegeben, wenn die erste Kennung aktiviert ist, d.h. wenn das Kennungsauswahlkriterium KA einen Wert von 1 aufweist.

Wenn die Zugriffssteuerungsinformation ZSI1 bis ZSIn einen binären Wert von "10" aufweist, ist ein schreibender und lesender Zugriff auf den zugehörigen Speicherblock SPB1 bis SPBn nur dann freigegeben, wenn die zweite Kennung aktiviert ist, d.h. wenn das Kennungsauswahlkriterium KA einen Wert von 0 aufweist.

Wenn die Zugriffssteuerungsinformation ZSI1 bis ZSIn einen binären Wert von "11" aufweist, ist unabhängig vom Kennungsauswahlkriterium KA kein schreibender Zugriff mehr möglich. Die Speicherblöcke SPB1 bis SPBn können dann lediglich gelesen werden, wobei die Lesefreigabe unabhängig vom Wert des Kennungsauswahlkriteriums KA ist.

Ein schreibender und/oder lesender Zugriff auf den Transponder kann in einer Ausführungsform erst dann freigegeben werden, wenn von der Leseeinheit LE das der aktivierten Kennung zugeordnete Passwort PW1 bzw. PW2 an den Transponder TR übertragen wird. Ein weitere Möglichkeit besteht darin, dass ein schreibender und/oder lesender Zugriff auf den Transponder bei aktivierter zweiter Kennung erst dann freigegeben wird, wenn das der zweiten Kennung zugeordnete Passwort PW2 an den Transponder übertragen wird, jedoch bei aktivierter erster Kennung ein schreibender und/oder lesender Zugriff auch ohne vorhergehende Passwortübertragung des Passworts PW1 möglich ist.

Hinsichtlich der Art der Passwortübertragung, der Einstellung des Kennungsauswahlkriteriums KA, der Funktion der Kryptographieeinheit KE und weiterer Übertragungsprotokollspezifischer Details wird auf die nicht vorveröffentlichte deutsche Patentanmeldung DE 10 2005 032 473.8 der Anmelderin verwiesen.

In den Speicherbereichen LB1 bis LB3 sind jeweils noch Speicherbereichszugriffssteuerungsinformationen in Form von so genannten Lock-Bits LCK vorgesehen, die einen Zugriff auf den gesamten Speicherbereich LB1 bis LB3 in einer vorgeschalteten Zugriffsebene steuern.

Für einen binären Wert von "00" der Lock-Bits LCK ist ein schreibender Zugriff auf den Speicherbereich LB1 bis LB3 unabhängig von einer Zustandsinformation des Transponder freigegeben.

Für einen binären Wert von "01" der Lock-Bits LCK ist ein schreibender Zugriff auf den Speicherbereich LB1 bis LB3 immer möglich, d.h. eine Verriegelung ist nicht möglich. Selbstverständlich ist eine Verriegelung der geeignetes Setzen der Zugriffssteuerungsinformation ZSI1 bis ZSIn speicherblockspezifisch weiterhin möglich.

Für einen binären Wert von "10" der Lock-Bits LCK ist ein schreibender Zugriff nur in einem so genannten "secured" Zustand bzw. State des Transponders TR möglich. Hinsichtlich diesbezüglicher Details sei auf den Normungsvorschlag ISO/IEC_CD 18000-6C vom 07.01.2005 verwiesen.

Für einen binären Wert von "11" ist ein schreibender Zugriff auf den Speicherbereich LB1 bis LB3 dauerhaft gesperrt. Dieser Zustand wird auch als "permalocked" bezeichnet.

Die gezeigten Ausführungsformen ermöglichen eine leistungsfähige und flexible Zugriffsteuerung auf die Speicherbereiche LB1 bis LB3 auf Speicherblockebene, wodurch eine effiziente Speicherausnutzung erzielbar ist.

## Patentansprüche

1. Verfahren zur Zugriffssteuerung auf mindestens einen Speicherbereich (LB1, LB2, LB3) eines, insbesondere passiven und/oder rückstreubasierten, Transponders (TR), bei dem
- in Abhängigkeit von einem Kennungsauswahlkriterium (KA) eine erste oder mindestens eine zweite Kennung (K1, K2) innerhalb des Transponders (TR) aktiviert wird,
- die aktivierte Kennung bei einer zugehörigen Anfrage durch eine Leseeinheit (LE) an diese übertragen wird,
- der mindestens eine Speicherbereich (LB1, LB2, LB3) des Transponders (TR) in Speicherblöcke (SPB1 bis SPBn) mit einer einstellbaren Größe aufgeteilt wird,
- einem jeweiligen Speicherblock (SPB1 bis SPBn) eine Zugriffssteuerungsinformation (ZSI1 bis ZSIn) zugeordnet wird und
- ein schreibender und/oder lesender Zugriff auf einen jeweiligen Speicherblock (SPB1 bis SPBn) in Abhängigkeit von der zugehörigen Zugriffssteuerungsinformation (ZSl1 bis ZSln) und dem Kennungsauswahlkriterium (KA) freigegeben oder gesperrt wird.

2. Verfahren nach Anspruch 1, **dadurch gekennzeichnet, dass** die Zugriffssteuerungsinformation (ZSI1 bis ZSIn) in einem nur einmalig programmierbaren Speicher des Transponders (TR) abgespeichert wird.

3. Verfahren nach Anspruch 1 oder 2, **dadurch gekennzeichnet, dass** die Zugriffssteuerungsinformation zwei Bits umfasst, wobei
- ein erstes aus den zwei Bits gebildetes Bitmuster einen schreibenden und lesenden Zugriff auf den jeweiligen Speicherblock (SPB1 bis SPBn) unabhängig davon freigibt, ob die erste Kennung (K1) oder die zweite Kennung (K2) aktiviert ist,
- ein zweites aus den zwei Bits gebildetes Bitmuster einen schreibenden und lesenden Zugriff auf den jeweiligen Speicherblock (SPB1 bis SPBn) bei aktivierter erster Kennung (K1) freigibt und bei deaktivierter erster Kennung (K1) sperrt,
- ein drittes aus den zwei Bits gebildetes Bitmuster einen schreibenden und lesenden Zugriff auf den jeweiligen Speicherblock (SPB1 bis SPBn) bei aktivierter zweiter Kennung (K2) freigibt und bei deaktivierter zweiter Kennung (K2) sperrt und
- ein viertes aus den zwei Bits gebildetes Bitmuster einen lesenden Zugriff auf den jeweiligen Speicherblock (SPB1 bis SPBn) freigibt und einen schreibenden Zugriff sperrt, unabhängig davon, ob die erste Kennung (K1) oder die zweite Kennung (K2) aktiviert ist.

4. Verfahren nach Anspruch 3, **dadurch gekennzeichnet, dass** das erste Bitmuster "00", das zweite Bitmuster "01", das dritte Bitmuster "10" und das vierte Bitmuster "11" jeweils in einer binären Darstellung beträgt.

5. Verfahren nach einem der vorhergehenden Ansprüche, **dadurch gekennzeichnet, dass** ein Zugriff auf den Transponder (TR) nur dann durch den Transponder (TR) freigegeben wird, wenn von der Leseeinheit (LE) ein der aktivierten Kennung zugeordnetes Passwort (PW1, PW2) an den Transponder (TR) übertragen wird.

6. Verfahren nach einem der vorhergehenden Ansprüche, **dadurch gekennzeichnet, dass** der Speicherblock (SPB1 bis SPBn) eine Größe einer ganzzahligen Vielfachen von 8 Bits aufweist.

7. Verfahren nach einem der vorhergehenden Ansprüche, **dadurch gekennzeichnet, dass** ein Zugriff auf den Speicherbereich (LB1, LB2, LB3) in einer vorgeschalteten Zugriffsebene durch eine 2 Bits umfassende Speicherbereichszugriffssteuerungsinformation (LCK) gesteuert wird, wobei für einen ersten Wert der Speicherbereichszugriffssteuerungsinformation (LCK) ein schreibender Zugriff auf den Speicherbereich (LB1, LB2, LB3) unabhängig von einer Zustandsinformation des Transponder (TR) freigegeben wird, für einen zweiten Wert der Speicherbereichszugriffssteuerungsinformation (LCK) ein schreibender Zugriff auf den Speicherbereich (LB1, LB2, LB3) abhängig von der Zustandsinformation des Transponders freigegeben wird und für einen dritten Wert der Speicherbereichszugriffssteuerungsinformation (LCK) ein schreibender Zugriff auf den Speicherbereich (LB1, LB2, LB3) dauerhaft gesperrt wird.

## Claims

1. Method for access control for at least one memory region (LB1, LB2, LB3) of a, especially passive and/or backscatter based, transponder (TR), wherein
- a first or at least one second identification (K1, K2) within the transponder (TR) is activated in response to an identification selection criteria (KA),
- the activated identification is transmitted to a reader station (LE) if the reader station (LE) requests the identification,
- the at least one memory region (LB1, LB2, LB3) of the transponder (TR) is segmented in memory blocks (SPB1 to SPBn) having an adjustable size,
- an access control information (ZSI1 to ZSIn) is allocated to each memory block (SPB1 to SPBn) and
- a read access and/or a write access to each memory block (SPB1 to SPBn) is permitted or denied in response to the corresponding access control information (ZIS1 to ZSln).

2. Method according to claim 1, **characterized in that** the access control information (ZSI1 to ZSln) is stored in an one-time programmable memory of the transponder (TR).

3. Method according to claim 1 or 2, **characterized in that** the access control information comprises two bits, wherein
- a first bit pattern formed of the two bits permits a write access and a read access to each memory block (SPB1 to SPBn) irrespective if the first identification (K1) or the second identification (K2) is activated,
- a second bit pattern formed of the two bits permits a write access and a read access to each memory block (SPB1 to SPBn) if the first identification (K1) is activated, and denies a write access and a read access to each memory block (SPB1 to SPBn) if the first identification (K1) is deactivated,
- a third bit pattern formed of the two bits permits a write access and a read access to each memory block (SPB1 to SPBn) if the second identification (K2) is activated, and denies a write access and a read access to each memory block (SPB1 to SPBn) if the second identification (K2) is deactivated, and
- a fourth bit pattern formed of the two bits permits a read access to each memory block (SPB1 to SPBn) and denies a write access irrespective if the first identification (K1) or the second identification (K2) is activated.

4. Method according to claim 3, **characterized in that** the first bit pattern is "00", the second bit pattern is "01 ", the third bit pattern is "10" and the fourth bit pattern is "11", each in a binary representation.

5. Method according to anyone of the preceding claims, **characterized in that** an access to the transponder (TR) is permitted by the transponder (TR) only if the reader station (LE) transmits a password (PW1, PW2) to the transponder (TR), which is associated with the activated identification.

6. Method according to anyone of the preceding claims, **characterized in that** the memory block (SPB1 to SPBn) has a size according to an integer multiple of eight bit.

7. Method according to anyone of the preceding claims, **characterized in that** an access to the memory region (LB1, LB2, LB3) in a preceding access layer is controlled by a memory region access control information (LCK) comprising two bit, wherein for a first value of the memory region access control information (LCK) a write access to the memory region (LB1, LB2, LB3) is permitted irrespective of a state information of the transponder (TR), for a second value of the memory region access control information (LCK) a write access to the memory region (LB1, LB2, LB3) is permitted in response to the state information of the transponder, and for a third value of the memory region access control information (LCK) a write access to the memory region (LB1, LB2, LB3) is permanently denied.

## Revendications

1. Procédé de commande d'accès à au moins une zone mémoire (LB1, LB2, LB3) d'un transpondeur (TR) passif et/ou basé sur la rétrodiffusion, selon lequel :
- on active une première ou au moins une deuxième identification (K1, K2) est activée à l'intérieur du transpondeur (TR) en fonction d'un critère de sélection d'identification (KA),
- l'identification activée pour une requête correspondante est transmise par une unité de lecture (LE) à celle-ci,
- l'au moins une zone mémoire (LB1, LB2, LB3) du transpondeur (TR) est divisée en blocs de mémoires (SPB1 à SPBn) de taille paramétrable,
- on associé à chaque bloc de mémoires (SPB1 à SPBn) une information de commande d'accès (ZSI1 à ZSIn), et
- on libère ou on bloque un accès en écriture et/ou en lecture à chacun des blocs de mémoires (SPB1 à SPBn) en fonction de l'information de commande d'accès (ZSI1 à ZSIn) correspondante et du critère de sélection d'identification (KA).

2. Procédé selon la revendication 1, **caractérisé en ce que** l'information de commande d'accès (ZSI1 à ZSIn) est mémorisée dans une mémoire du transpondeur (TR) ne pouvant être programmée qu'une fois.

3. Procédé selon la revendication 1 ou 2, **caractérisé en ce que** l'information de commande d'accès comprend deux bits, selon lequel :
- un premier groupement binaire constitué à partir des deux bits libère un accès en écriture et en lecture à chacun des blocs de mémoires (SPB1 à SPBn), indépendamment du fait que la première identification (K1) ou la deuxième identification (K2) est activée,
- un deuxième groupement binaire constitué à partir des deux bits libère un accès en écriture et en lecture à chacun des blocs de mémoires (SP1 à SPBn) lorsque la première identification (K1) est activée et le bloque lorsque la première identification (K1) est désactivée,
- un troisième groupement binaire constitué à partir des deux bits libère un accès en écriture et en lecture à chacun des blocs de mémoires (SPB1 à SPBn) lorsque la deuxième identification (K2) est activée et le bloque lorsque la deuxième identification (K2) est désactivée,
- un quatrième groupement binaire constitué à partir des deux bits libère un accès en lecture à chacun des blocs de mémoires (SPB1 à SPBn) et bloque un accès en écriture, indépendamment du fait que la première identification (K1) ou la deuxième identification (K2) est activée.

4. Procédé selon la revendication 3, **caractérisé en ce que** le première groupement binaire consiste en "00", le deuxième groupement binaire en "01", le troisième groupement binaire en "10" et le quatrième groupement binaire en "11" chaque fois dans une représentation binaire.

5. Procédé selon l'une quelconque des revendications précédentes, **caractérisé en ce que** le transpondeur (TR) ne libère un accès au transpondeur (TR) que lorsque l'unité de lecture (LE) transmet au transpondeur (TR) un mot de passe (PW1, PW2) correspondant à l'identification activée.

6. Procédé selon l'une quelconque des revendications précédentes, **caractérisé en ce que** le bloc de mémoires (SP1 à SPBn) présente une taille correspondant à un multiple entier de 8 bits.

7. Procédé selon l'une quelconque des revendications précédentes, **caractérisé en ce qu'**un accès à la zone mémoire (LB1, LB2, LB3) dans un plan d'accès est commandé par une information de commande d'accès dans la zone mémoire (LCK) comprenant 2 bits, selon lequel un accès en écriture à la zone mémoire (LB1, LB2, LB3) est libéré pour une première valeur de l'information de commande d'accès dans la zone mémoire (LCK) indépendamment d'une information d'état du transpondeur (TR), un accès en écriture à la zone mémoire (LB1, LB2, LB3) est libéré pour une première valeur de l'information de commande d'accès dans la zone mémoire (LCK) indépendamment de l'information d'état du transpondeur, et un accès en écriture à la zone mémoire (LB1, LB2, LB3) est bloqué en permanence pour une troisième valeur de l'information de commande d'accès dans la zone mémoire (LCK).
